# EUROPÄISCHE PATENTANMELDUNG

(11) **EP 4 113 471 A1**
(43) Veröffentlichungstag der Anmeldung: **04.01.2023**
(21) Anmeldenummer: 22181898.2
(22) Anmeldetag: 29.06.2022
(51) Int. Cl.: G08B 21/02, H02H 5/12

(54) **SPANNUNGSWARNSYSTEM FÜR EINE MITTELSPANNUNGSANLAGE, MITTELSPANNUNGSANLAGE UND BASISEINHEIT**

(30) Priorität: 30.06.2021 DE 102021116903
(71) Anmelder: Westnetz GmbH, 44139 Dortmund (DE)
(72) Erfinder: Ahrens, Michael, 41464 Neuss (DE); Brandelik, Kevin, 59889 Eslohe (DE); Golla, Patrick, 50354 Hürth (DE); Hölker, Daniel, 48341 Altenberge (DE); Kammering, Hanna, 44143 Düsseldorf (DE); Wölke, Bastian, 46562 Voerde (DE)
(74) Vertreter: Bals & Vogel Patentanwälte PartGmbB

(57) **Zusammenfassung**

Die Erfindung betrifft ein Spannungswarnsystem (10) für eine Mittelspannungsanlage (11), aufweisend eine Spannungs-Ermittlungseinheit (12) zum Ermitteln einer elektrischen Spannung in einem Betriebsbereich (24) der Mittelspannungsanlage (11), eine Zustands-Ermittlungseinheit (13) zum Ermitteln eines Gefahrenzustands im Betriebsbereich (24) anhand der ermittelten Spannung, eine Zutrittsabsicht-Erkennungseinheit (14) zum Erkennen einer Zutrittsabsicht einer Person (20) in den Betriebsbereich (24), ein Warnmittel (15) zum Ausgeben eines akustischen und/oder optischen Warnsignals zum Warnen der Person (20) vor dem Betreten der Mittelspannungsanlage (11) und eine Kontrolleinheit (16), die konfiguriert ist, das Warnmittel (15) zum Erzeugen des Warnsignals abhängig vom ermittelten Gefahrenzustand sowie abhängig von der erkannten Zutrittsabsicht anzusteuern. Die Erfindung betrifft ferner eine Mittelspannungsanlage (11) mit einem erfindungsgemäßen Spannungswarnsystem (10) und eine Basiseinheit (30) für ein erfindungsgemäßes Spannungswarnsystem (10).

## Beschreibung

Die vorliegende Erfindung betrifft ein Spannungswarnsystem für eine Mittelspannungsanlage mit einer Spannungs-Ermittlungseinheit zum Ermitteln einer elektrischen Spannung in einem Betriebsbereich der Mittelspannungsanlage, einer Zustands-Ermittlungseinheit zum Ermitteln eines Gefahrenzustands im Betriebsbereich anhand der ermittelten Spannung sowie ein Warnmittel zum Ausgeben eines Warnsignals zum Warnen einer Person vor dem Betreten und/oder Eindringen der Mittelspannungsanlage anhand des ermittelten Gefahrenzustands. Die Erfindung betrifft ferner eine Mittelspannungsanlage sowie eine Basiseinheit zur Installation in einer Mittelspannungsanlage.

In Industrieanlagen wie einer Mittelspannungsanlage sind Schutzmechanismen erforderlich, um Menschen vor unsichtbaren Gefahren wie einer gefährlich hohen Spannung an Bauteilen im Betriebsbereich der Mittelspannungsanlage zu schützen. Der Betriebsbereich einer Mittelspannungsanlage befindet sich insbesondere in einer Schaltanlage, an einer Schaltanlage sowie in einer direkten Umgebung der Schaltanlage, in welcher sich zumindest in einem Fehlerfall nicht gesicherte und unter Spannung stehende Bauteil befinden können. Um auf die Gefahr einer solchen Situation aufmerksam zu machen und damit Unfälle möglichst zu verhindern, wurden Warnvorrichtungen entwickelt, die im Bereich einer Zugangstür zum Betriebsbereich der Mittelspannungsanlage ein Warnsignal ausgeben, sobald im Betriebsbereich und/oder an der Schaltanlage beispielsweise eine gefährlich hohe Spannung erkannt wurde. Das Verhindern von Unfällen mittels einer solchen Warnvorrichtung setzt jedoch voraus, dass eine Person beim Betreten des Betriebsbereichs und/oder bei einem Eindringen in den Betriebsbereich aktiv auf die Warnvorrichtung bzw. den das Warnsignal ausgebenden Teil der Warnvorrichtung im Bereich der Zugangstür schaut. Dies ist in der Realität häufig nicht der Fall. Darüber hinaus ist die Nachrüstung von Schaltanlagen mit der bekannten Technologie meist nur mit kostspieliger Hardware und einem komplexen Einbau möglich.

Aufgabe der vorliegenden Erfindung ist es, der voranstehend beschriebenen Problematik zumindest teilweise Rechnung zu tragen. Insbesondere ist es Aufgabe der vorliegenden Erfindung, ein Spannungswarnsystem, eine Mittelspannungsanlage sowie eine Basiseinheit zum zuverlässigen Warnen von Personen vor möglichen Gefahren wie einer Überspannung an ungesicherten Bauteilen in einer Industrieanlage wie einer Mittelspannungsanlage zu schaffen.

Die voranstehende Aufgabe wird durch die Patentansprüche gelöst. Insbesondere wird die voranstehende Aufgabe durch das Spannungswarnsystem gemäß Anspruch 1, die Mittelspannungsanlage gemäß Anspruch 9 sowie die Basiseinheit gemäß Anspruch 10 gelöst. Weitere Vorteile der Erfindung ergeben sich aus den Unteransprüchen, der Beschreibung und den Figuren. Dabei gelten Merkmale, die im Zusammenhang mit dem Spannungswarnsystem beschrieben sind, selbstverständlich auch im Zusammenhang mit der erfindungsgemäßen Mittelspannungsanlage sowie der Basiseinheit und jeweils umgekehrt, sodass bezüglich der Offenbarung zu den einzelnen Erfindungsaspekten stets wechselseitig Bezug genommen wird und/oder werden kann.

Gemäß einem ersten Aspekt der vorliegenden Erfindung wird ein Spannungswarnsystem für eine Mittelspannungsanlage bereitgestellt. Das Spannungswarnsystem weist eine Spannungs-Ermittlungseinheit zum Ermitteln einer elektrischen Spannung in einem Betriebsbereich der Mittelspannungsanlage, eine Zustands-Ermittlungseinheit zum Ermitteln eines Gefahrenzustands im Betriebsbereich anhand der ermittelten Spannung, eine Zutrittsabsicht-Erkennungseinheit zum Erkennen einer Zutrittsabsicht einer Person in den Betriebsbereich und ein Warnmittel zum Ausgeben eines akustischen und/oder optischen Warnsignals zum Warnen der Person vor dem Betreten der Mittelspannungsanlage auf. Außerdem weist das Spannungswarnsystem eine Kontrolleinheit auf, die konfiguriert ist, das Warnmittel zum Erzeugen des Warnsignals abhängig vom ermittelten Gefahrenzustand sowie abhängig von der erkannten Zutrittsabsicht anzusteuern. Das heißt, die Kontrolleinheit ist konfiguriert, das Warnsignal nur dann auszugeben, wenn ein vordefinierter und/oder vordefinierbarer Gefahrenzustand und zusätzlich die Zutrittsabsicht der Person erkannt bzw. ermittelt wurden. Unter dem Gefahrenzustand kann ein Betriebszustand der Mittelspannungsanlage verstanden werden, in welchem für eine Person im Betriebsbereich und/oder an einer Schaltanlage der Mittelspannungsanlage eine Gefahr ausgeht oder nicht. Liegt beispielsweise durch einen fehlerhaften Schaltkontakt eine für die Person gefährliche Spannung an einem von außen berührbaren Schaltbauteil an und wird dies mittels der Spannungs-Ermittlungseinheit ermittelt bzw. festgestellt, wird durch die Zustands-Ermittlungseinheit ein entsprechender Gefahrenzustand, beispielsweise in Form eines bedenklichen Gefahrenzustands, ermittelt. Kann keine gefährliche Spannung ermittelt werden, kann durch die Zustands-Ermittlungseinheit ein entsprechend niedriger Gefahrenzustand, beispielsweise in Form eines unbedenklichen Gefahrenzustands, ermittelt werden. Das Warnmittel ist erfindungsgemäß dahingehend konfiguriert, dass das Warnsignal nur im Falle eines bedenklichen Gefahrenzustands sowie einer erkannten Zutrittsabsicht erzeugt wird. Liegt ein bedenklicher Gefahrenzustand vor und es kann keine Zutrittsabsicht erkannt werden, wird auch kein Warnsignal erzeugt. Ebenso wenig wird ein Warnsignal erzeugt, wenn zwar eine Zutrittsabsicht erkannt wird, jedoch ein unbedenklicher Gefahrenzustand ermittelt wird.

Damit ist es auf einfache Weise möglich, die Aufmerksamkeit einer Person, die sich in Richtung der möglichen Gefahrenstelle im Betriebsbereich der Mittelspannungsanlage und/oder in Richtung einer Zugangstür zum Betriebsbereich und damit zur möglichen Gefahrenstelle bewegt, gezielt und entsprechend effektiv auf das akustische und/oder optische Warnsignal zu lenken. Durch das vorgeschlagene Spannungswarnsystem kann eine gewisse Betriebsblindheit bzw. Betriebstaubheit gegenüber eines Warnsignals, das unabhängig von einer erkannten Zutrittsabsicht ausgegeben wird, verhindert werden. Versuche im Rahmen der vorliegenden Erfindung haben gezeigt, dass ein Warnsignal, das abhängig von der erkannten Zutrittsabsicht und entsprechend erst in diesem Moment erzeugt und angezeigt und/oder ausgegeben wird, im Vergleich zu einem Warnsignal, das unabhängig von der Zutrittsabsicht durchgehend angezeigt und/oder ausgegeben wird, von der Person mit Zutrittsabsicht deutlich zuverlässiger wahrgenommen und entsprechend häufiger sowie zuverlässiger berücksichtigt wird. Damit wird eine zusätzliche Sicherheitsebene geschaffen, um Unfälle zu verhindern.

Unter dem Erkennen der Zutrittsabsicht kann ein Erkennen und/oder Ermitteln unter Verwendung geeigneter Erkennungssensorik wie einem Anwesenheitssensor und/oder einem Bewegungssensor zum Erkennen einer Bewegung der Person in Richtung des Betriebsbereichs und/oder zum Erkennen einer vordefinierten und/oder vordefinierbaren Handlung der Person zum Betreten des Betriebsbereichs verstanden werden. Zum Erkennen der Zutrittsabsicht kann die Kontrolleinheit ferner zum Analysieren und Auswerten der Art der Bewegung der Person konfiguriert sein. Die Zutrittsabsicht kann als eine Handlung der Person verstanden werden, basierend auf welcher davon ausgegangen werden kann, dass die Person den Betriebsbereich betreten möchte. Der Betriebsbereich kann als der Bereich und/oder Ort innerhalb der Mittelspannungsanlage verstanden werden, in welchem beispielsweise die Schaltanlage und/oder Schaltanlagen positioniert sind. So ist unter dem Betriebsbereich insbesondere ein geschlossener, abschließbarer und/oder entsprechend beschränkt zugänglicher Raum zu verstehen, in welchem die wenigstens eine Schaltanlage zum Betreiben der Mittelspannungsanlage positioniert sein kann. Der Betriebsbereich umfasst insbesondere frei zugängliche Funktionsbauteile, die in einem möglichen Fehlerfall unter gefährlich hoher Spannung und/oder entsprechend hohem Strom stehen können.

Im Rahmen des Ermittelns der elektrischen Spannung kann insbesondere an wenigstens einem Funktionsbauteil der Mittelspannungsanlage, insbesondere an unterschiedlichen Funktionsbauteilen wenigstens einer Schaltanlage der Mittelspannungsanlage, eine elektrische Spannung mittels einer geeigneten Spannungsmessvorrichtung gemessen werden. Die Spannungs-Ermittlungseinheit ist vorzugsweise zum Ermitteln der elektrischen Spannung in Schaltfeldern wenigstens einer Schaltanlage der Mittelspannungsanlage konfiguriert und positioniert. Die elektrische Spannung kann direkt oder indirekt, insbesondere anhand ermittelter Feldstärken, ermittelt werden. Das heißt, zum Ermitteln der elektrischen Spannung kann unter Verwendung wenigstens eines Sensors die elektrische Feldstärke an wenigstens einer Position im Betriebsbereich und/oder einem Funktionsbauteil der wenigstens einen Schaltanlage gemessen werden. Unter der zu ermittelnden Spannung und/oder Feldstärke kann eine Messspannung und/oder Messfeldstärke verstanden werden. Ausgehend von der gemessenen Feldstärke kann anschließend die entsprechende elektrische Spannung ermittelt werden. Mithin kann der Erfindungsgegenstand auch dahingehend verstanden werden, dass die Spannungs-Ermittlungseinheit zum Ermitteln einer bzw. wenigstens einer elektrischen Feldstärke im Betriebsbereich der Mittelspannungsanlage konfiguriert ist und die Zustands-Ermittlungseinheit zum Ermitteln des Gefahrenzustands im Betriebsbereich anhand der wenigstens einen ermittelten Feldstärke konfiguriert ist.

Unter dem Warnen vor dem Betreten ist vorzugsweise zu verstehen, dass die Person davor gewarnt werden soll, den Betriebsbereich zu betreten und/oder in den Betriebsbereich einzudringen. Das heißt, durch das Warnsignal soll der Person rechtzeitig vor Betreten des Betriebsbereiches automatisch mitgeteilt werden, dass der Betriebsbereich nicht oder nur mit ausreichend Vorsicht zu betreten ist. Indem mittels der Zutrittsabsicht-Erkennungseinheit die Zutrittsabsicht der Person erkannt wird, kann die Person noch rechtzeitig vor dem Betreten des Betriebsbereichs vor möglichen, spannungsbedingten Gefahren gewarnt werden. Das Warnmittel kann eine Warneinheit oder mehrere Warneinheiten aufweisen, die vorzugsweise außerhalb, aber auch innerhalb des Betriebsbereichs bzw. eines Schaltraums positioniert sein und/oder werden können.

Zum Ermitteln des Gefahrenzustands weist das Spannungswarnsystem vorzugsweise ein Vergleichsmittel zum Durchführen eines Vergleichs zwischen der ermittelten Spannung und einer Referenzspannung und ein Auswertungsmittel zum Auswerten des Vergleichs zwischen der ermittelten Spannung und der Referenzspannung auf, um zu bestimmen, ob die ermittelte Spannung höher als die Referenzspannung ist, wobei die Kontrolleinheit konfiguriert ist, das Warnmittel zum Erzeugen des Warnsignals anzusteuern, wenn bestimmt wird, dass die gemessene Spannung höher als die Referenzspannung ist. Die Referenzspannung kann in einem Speichermittel des Spannungswarnsystems gespeichert und von dort bezogen, oder von extern, adaptiv und/oder je nach Anwendungsfall statisch oder dynamisch, bezogen und/oder eingestellt werden. Wenn die ermittelte Spannung höher als die Referenzspannung ist, kann darauf geschlossen werden, dass ein bedenklicher Gefahrenzustand vorliegt. Liegt die ermittelte Spannung unter der Referenzspannung, kann von einem unbedenklichen Gefahrenzustand ausgegangen werden bzw. der Gefahrenzustand entsprechend ermittelt werden. Anstelle des Vergleichs zwischen der ermittelten Spannung und der Referenzspannung kann ein Vergleich zwischen einer ermittelten Feldstärke und einer Referenzfeldstärke durchgeführt werden. Das vorstehend zur Referenzspannung Beschriebene gilt in diesem Fall auf analoge Weise. Die Referenzspannung weist vorzugsweise einen vordefinierten Abstand bzw. einen entsprechenden Offset von einem zulässigen Spannungswert und/oder einer bei einer Installation des Spannungswarnsystems gemessenen Normalspannung auf. Damit können insbesondere durch Spannungsschwankungen ausgelöste Fehlalarme verhindert werden.

Zum erfindungsgemäßen Erzeugen des Warnsignals stehen die Spannungsermittlungseinheit, die Zustandsermittlungseinheit und/oder die Zutrittsabsicht-Erkennungseinheit mit der Kontrolleinheit, insbesondere durch Signalleitungen kabelgebunden, in Signalverbindung. Die Kontrolleinheit kann entsprechend eine Signal- und/oder Datenverarbeitungseinheit wie eine ECU zum Auswerten der jeweils empfangenen Signale umfassen.

Gemäß einer weiteren Ausführungsform der vorliegenden Erfindung kann ein Spannungswarnsystem eine Basiseinheit mit einem für die Montage in der Mittelspannungsanlage konfigurierten Montagegehäuse aufweisen, wobei die Spannungs-Ermittlungseinheit, die Zustands-Ermittlungseinheit und die Kontrolleinheit innerhalb des Montagegehäuses angeordnet sind. Die Basiseinheit einschließlich des Montagegehäuses kann als kompaktes Gerät bereitgestellt werden, das bei der Installation der Anlage, insbesondere in Form der Mittelspannungsanlage, oder nachträglich, in Schaltfeldern eingebaut und betrieben werden kann. Die Basiseinheit kann wenigstens einen Signaleingang für einen außerhalb des Montagegehäuses positionierbaren Sensor bzw. zum Empfangen eines Signals des Sensors der Spannungs-Ermittlungseinheit zum Ermitteln der Spannung aufweisen. Die Basiseinheit kann ferner wenigstens einen Signaleingang für einen außerhalb des Montagegehäuses positionierbaren weiteren Sensor bzw. zum Empfangen eines Signals des Sensors der Zutrittsabsicht-Erkennungseinheit zum Erkennen der Zutrittsabsicht aufweisen. Die Basiseinheit kann wenigstens einen Signalausgang zum Ausgeben eines Ansteuersignals an das Warnmittel zum Erzeugen des Warnsignals aufweisen. Die Basiseinheit kann weitere Signaleingänge für weitere Sensoren und/oder weitere Signalausgänge zum Ausgeben von Ansteuersignalen an mehrere unterschiedliche Warneinheiten des Warnmittels, beispielsweise an unterschiedlichen Zugangstüren und/oder entsprechenden Sperrmitteln, aufweisen. Unter einem Signaleingang und/oder einem Signalausgang kann jeweils ein Signalanschluss bzw. ein Anschluss verstanden werden, an welchem gattungsgemäße Kabel und/oder Leitungen für eine Signalverbindung zwischen den jeweiligen Bauteilen angeschlossen werden können.

Ferner ist es möglich, dass ein erfindungsgemäßes Spannungswarnsystem eine Einstelleinheit zum Einstellen einer Referenzspannung aufweist, wobei die Zustands-Ermittlungseinheit konfiguriert ist, den Gefahrenzustand abhängig von einem Abstand zwischen der erkannten Spannung und der Referenzspannung zu ermitteln. In unterschiedlichen Mittelspannungsanlagen werden in der Regel unterschiedliche Referenzspannungen benötigt, um das Warnsignal wie gewünscht zu erzeugen. Mittels der Einstelleinheit kann das Spannungswarnsystem mithin schnell und einfach an verschiedene Anlagen, insbesondere Mittelspannungsanlagen, angepasst werden, sodass das Warnsignal möglichst nur im gewünschten Zeitpunkt erzeugt wird. Damit kann das Spannungswarnsystem entsprechend flexibel in verschiedenen Umgebungen, beispielsweise bei unterschiedlichen Geometrien der Schaltschränke, eingesetzt werden, die jeweils individuelle elektrische Feldstärken und damit entsprechende elektrische Spannungswerte bedingen. Mit Bezug auf die vorstehend beschriebene Basiseinheit kann die Einstelleinheit dahingehend konfiguriert sein, dass die Eingangsempfindlichkeiten der unterschiedlichen Signaleingänge und/oder Signalausgänge unterschiedlich eingestellt werden können. Die Einstelleinheit kann damit auch als Kalibrierungsmittel zum Kalibrieren der vorstehend beschriebenen Basiseinheit verstanden werden. Unter der Referenzspannung kann eine Aktivierungsschwelle verstanden werden, welche einem Spannungswert entspricht, der von einem Sensor und/oder der Spannungs-Ermittlungseinheit mindestens gemessen bzw. ermittelt werden muss, um einen Alarm auszulösen bzw. den Gefahrenzustand, basierend auf welchem das Warnsignal erzeugt wird, entsprechend zu ermitteln. Mittels der Einstelleinheit kann die Referenzspannung dahingehend abgestimmt werden, dass auch bei zulässigen Spannungsschwankungen eine zuverlässige Alarmierung sichergestellt ist und das Auslösen eines Fehlalarms möglichst verhindert wird. Unter dem Abstand kann eine Differenzspannung, also ein Spannungswert, um welchen sich die ermittelte Spannung und die Referenzspannung voneinander unterscheiden, verstanden werden.

Gemäß einer weiteren Ausgestaltungsvariante der vorliegenden Erfindung kann das Spannungswarnsystem eine Leuchteinheit zum Signalisieren eines vordefinierbaren Abstands zwischen einer erkannten Spannung während einer Installation des Spannungswarnsystems in einer Mittelspannungsanlage und der einzustellenden Referenzspannung anhand eines Vergleichs zwischen der ermittelten Spannung und der Referenzspannung aufweisen. Die Leuchteinheit kann wenigstens ein Leuchtmittel, beispielsweise in Form wenigstens einer Kontroll-LED, in und/oder an einem wie vorstehend beschriebenen Montagegehäuse, aufweisen. Sobald während einer Installation der Basiseinheit anhand eines Vergleichs zwischen einer ermittelten Spannung und einer eingestellten Referenzspannung festgestellt wird, dass die ermittelte Spannung bzw. ein entsprechender Spannungs- und/oder Feldstärkewert höher und/oder um einen vordefinierbaren Wert höher als die Referenzspannung bzw. ein entsprechender Referenzwert ist, kann das Leuchtmittel durch die Kontrolleinheit angesteuert werden, um entsprechend zu leuchten. Das heißt, ein ausreichender bzw. gewünschter Abstand, der bei einer Installation des Spannungswarnsystems in einer Mittelspannungsanlage ermittelten Spannung zur Referenzspannung kann beispielsweise über ein Leuchtmittel der Leuchteinheit kenntlich gemacht werden. Falls der gewünschte bzw. vordefinierbare Abstand zur Referenzspannung nicht erreicht ist bzw. wurde, kann durch ein Verstärkungsmittel, beispielsweise in Form eines Drehrädchens am Montagegehäuse, die Verstärkung eines zugehörigen Sensors des Spannungswarnsystems erhöht werden, bis die Kontroll-LED bzw. ein entsprechendes Leuchtmittel der Leuchteinheit in einem aktivierten Zustand des Spannungswarnsystems leuchtet. Zum Durchführen einer solchen Kalibrierung kann das Spannungswarnsystem ferner einen Analog/Digital-Wandler und ein Steuergerät, beispielsweise in Form eines Mikrocontrollers, aufweisen. Damit kann der Referenzwert, beispielsweise mittels eines entsprechend programmierten Computerprogrammprodukts, automatisiert parametrisiert werden. Die Leuchteinheit ist bei einem Spannungswarnsystem vorzugsweise am Montagegehäuse ausgestaltet. Insbesondere kann die Leuchteinheit mehrere LEDs zum Signalisieren des eingestellten Abstands zwischen der ermittelten Spannung während der Installation des Spannungswarnsystems und der Referenzspannung aufweisen. Ein erstes Leuchtmittel kann beispielsweise dahingehend konfiguriert sein, dass dieses leuchtet, sobald die ermittelte Spannung über der eingestellten Referenzspannung liegt. Ein zweites Leuchtmittel der Leuchteinheit kann beispielsweise erst dann leuchten, wenn ein Abstand bzw. ein entsprechender Offset zwischen der ermittelten Spannung und der einstellbaren Referenzspannung einen vordefinierbaren Wert bzw. Abstandswert einnimmt. Das Spannungswarnsystem darf beispielsweise nur dann in Betrieb genommen werden, wenn beide Leuchtmittel leuchten, also der Referenzwert ausreichend weit von der ermittelten Spannung und/oder einer entsprechenden Normalspannung in einem Normalbetrieb der Mittelspannungsanlage entfernt ist.

Gemäß einer weiteren Ausgestaltungsvariante der vorliegenden Erfindung ist es möglich, dass bei einem Spannungswarnsystem die Zutrittsabsicht-Erkennungseinheit einen Türkontakt zum Erkennen eines Öffnens einer Zugangstür zur Mittelspannungsanlage aufweist und die Kontrolleinheit konfiguriert ist, das Warnmittel zum Erzeugen des Warnsignals anzusteuern, wenn das Öffnen der Zugangstür erkannt wird. Das Öffnen der Zugangstür unter Verwendung des Türkontakts kann beispielsweise durch Betätigung eines Türgriffs, einer Schließvorrichtung der Zugangstür und/oder einer entsprechenden Vorrichtung zum Öffnen der Zugangstür erkannt werden. Über den Türkontakt bzw. die Betätigung der Zugangstür kann die Zutrittsabsicht einfach und zuverlässig erkannt werden.

Bei einem erfindungsgemäßen Spannungswarnsystem ist es ferner möglich, dass die Zutrittsabsicht-Erkennungseinheit ein Bewegungserkennungsmittel zum Erkennen einer Bewegung der Person in Richtung einer Zugangstür zur Mittelspannungsanlage aufweist und die Kontrolleinheit konfiguriert ist, das Warnmittel zum Erzeugen des Warnsignals anzusteuern, wenn die Bewegung einer Person in Richtung der Zugangstür erkannt wird. So kann die Zutrittsabsicht besonders frühzeitig, insbesondere zu einem Zeitpunkt, noch bevor die Person die Zugangstür erreicht hat, erkannt werden. Ein Warnsignal, beispielsweise in Form eines roten Warnlichts an der Zugangstür, kann die Person damit frühzeitig wahrnehmen. Der Fall, in welchem die Person das Warnsignal übersieht, da das Warnsignal bereits ausgegeben wird, noch bevor die Person in der Nähe der Mittelspannungsanlage ist und das Warnsignal von der Person bei Betreten der Mittelspannungsanlage deshalb nicht wahrgenommen wird, kann verhindert werden. Das Bewegungserkennungsmittel kann einen Bewegungssensor umfassen.

Ein Spannungswarnsystem gemäß der vorliegenden Erfindung kann zudem ein im Montagegehäuse positioniertes Netzteil für eine Netzstromversorgung der Basiseinheit, einen im Montagegehäuse integrierten Akkumulator für einen Akkubetrieb der Basiseinheit und/oder ein Batteriefach zum Einsetzen von wenigstens einer Batterie für einen Batteriebetrieb der Basiseinheit aufweisen. Damit lässt sich die Basiseinheit, insbesondere nachträglich, besonders flexibel in der Mittelspannungsanlage installieren.

Gemäß einem weiteren Aspekt der vorliegenden Erfindung wird eine Mittelspannungsanlage mit einem wie vorstehend im Detail beschriebenen Spannungswarnsystem zur Verfügung gestellt. Damit bringt die erfindungsgemäße Mittelspannungsanlage die gleichen Vorteile mit sich, wie sie ausführlich mit Bezug auf das erfindungsgemäße Spannungswarnsystem beschrieben worden sind. Die Mittelspannungsanlage weist einen Betriebsbereich auf, in welchem wenigstens eine Schaltanlage angeordnet ist, wobei der Betriebsbereich durch eine Zugangstür oder wenigstens eine alternative Schließvorrichtung abschließbar ist. Das Warnmittel ist vorzugsweise außerhalb des Betriebsbereichs, insbesondere im Bereich der Zugangstür, positioniert. Gleichwohl kann auch wenigstens ein Teil des Warnmittels, beispielsweise eine von mehreren Warnleuchten, innerhalb des Betriebsbereichs positioniert sein. Das Spannungswarnsystem weist vorzugsweise die vorstehend im Detail beschriebene Basiseinheit auf, wobei die Basiseinheit und/oder zumindest das Montagegehäuse der Basiseinheit mit den darin installierten Funktionskomponenten im Betriebsbereich, vorzugsweise in einem Schaltfeld wenigstens einer Schaltanlage, installiert ist. Die Basiseinheit steht ferner bevorzugt mittels Zutrittsabsicht-Erkennungseinheit-Signalanschluss mit der Zutrittsabsicht-Erkennungseinheit in Signalverbindung und mittels Warnmittel-Signalanschluss bzw. durch einen entsprechenden Signalausgang mit dem Warnmittel zum Übertragen des Warnsignals an das Warnmittel in Signalverbindung. Ferner kann die Basiseinheit zum Erkennen eines Öffnens der Zugangstür bevorzugt durch einen ersten Zutrittsabsicht-Erkennungseinheit-Signalanschluss bzw. -Signaleingang mit dem Türkontakt in Signalverbindung und/oder zum Erkennen der Bewegung der Person in Richtung der Zugangstür durch einen zweiten Zutrittsabsicht-Erkennungseinheit-Signalanschluss bzw. -Signaleingang mit dem Bewegungserkennungsmittel in Signalverbindung stehen. Die Mittelspannungsanlage ist vorzugsweise für einen Betrieb in einem Bereich zwischen 1 kV und 36kV konfiguriert.

Im Rahmen der vorliegenden Erfindung wird ferner eine Basiseinheit für eine wie vorstehend beschriebene Mittelspannungsanlage vorgeschlagen. Die Basiseinheit weist ein für die Montage in der Mittelspannungsanlage konfiguriertes Montagegehäuse auf, in und/oder an welchem eine Spannungs-Ermittlungseinheit zum Ermitteln einer elektrischen Spannung in einem Betriebsbereich der Mittelspannungsanlage, eine Zustands-Ermittlungseinheit zum Ermitteln eines Gefahrenzustands im Betriebsbereich anhand der ermittelten Spannung, eine Kontrolleinheit, wenigstens ein Zutrittsabsicht-Erkennungseinheit-Signalanschluss zum Empfangen eines Zutrittsabsichtsignals von einer Zutrittsabsicht-Erkennungseinheit zum Erkennen einer Zutrittsabsicht einer Person in den Betriebsbereich, und wenigstens ein Warnmittel-Signalanschluss zum Senden eines Ansteuersignals zu einem Warnmittel zum Ausgeben eines akustischen und/oder optischen Warnsignals zum Warnen der Person vor dem Betreten der Mittelspannungsanlage ausgestaltet sind. Die Kontrolleinheit ist bei einer solchen Basiseinheit konfiguriert, das Warnmittel zum Erzeugen des Warnsignals abhängig vom ermittelten Gefahrenzustand sowie abhängig von der erkannten Zutrittsabsicht anzusteuern. Damit bringt auch die erfindungsgemäße Basiseinheit die vorstehend beschriebenen Vorteile mit sich.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: eine Mittelspannungsanlage mit einem Spannungswarnsystem gemäß einer ersten Ausführungsform der vorliegenden Erfindung,
- Figur 2: eine Basiseinheit gemäß einer ersten Ausführungsform der vorliegenden Erfindung,
- Figur 3: eine Mittelspannungsanlage mit einem Spannungswarnsystem gemäß einer zweiten Ausführungsform der vorliegenden Erfindung,
- Figur 4: eine Basiseinheit gemäß einer zweiten Ausführungsform der vorliegenden Erfindung, und
- Figur 5: eine Basiseinheit gemäß einer dritten Ausführungsform der vorliegenden Erfindung.

Elemente mit gleicher Funktion und Wirkungsweise sind in den Figuren jeweils mit den gleichen Bezugszeichen versehen.

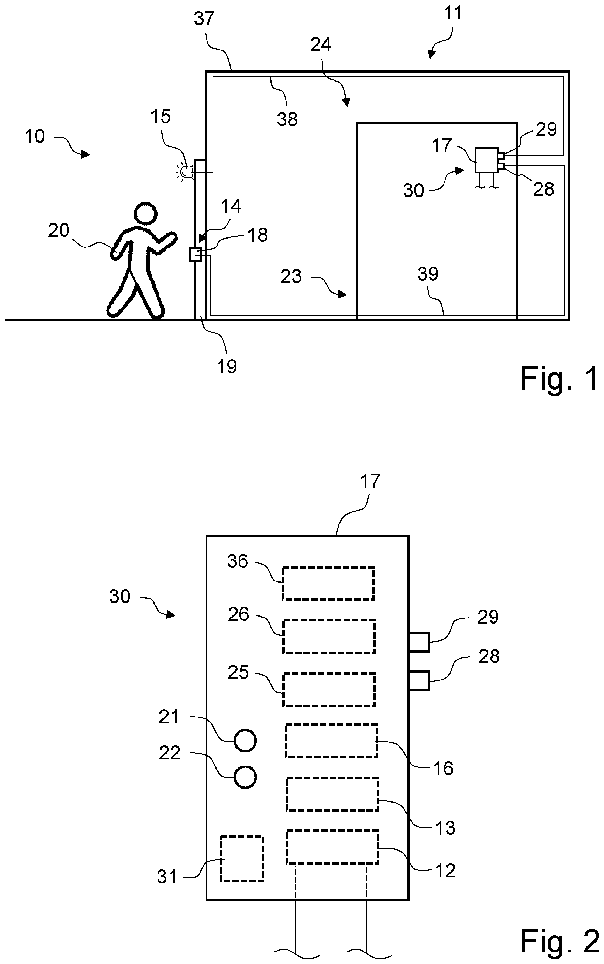

Fig. 1 zeigt eine Mittelspannungsanlage 11 mit einem Spannungswarnsystem 10 gemäß einer ersten Ausführungsform. Die Mittelspannungsanlage 11 weist einen Schaltraum 37 mit einer darin angeordneten Schaltanlage 23 auf. Im Schaltraum 37 befindet sich ein Betriebsbereich 24 der Mittelspannungsanlage, der sich insbesondere auf den Bereich der Schaltanlage 23 erstreckt. Der Schaltraum 37 bzw. der Betriebsbereich 24 kann durch eine Zugangstür 19 geöffnet oder geschlossen werden. Durch die Zugangstür 19 hat eine Person 20 Zugang zum Betriebsbereich 24 sowie zur Schaltanlage 23, die sich im Betriebsbereich 24 befindet und einen Teil des Betriebsbereichs 24 definiert.

In der in Fig. 1 gezeigten Mittelspannungsanlage 11 ist ein Spannungswarnsystem 10 installiert. Das Spannungswarnsystem 10 weist eine Basiseinheit 30 mit einem für die Montage in der Mittelspannungsanlage 11 konfigurierten Montagegehäuse 17 auf. Das Montagegehäuse 17 der Basiseinheit 30 ist in einem Schaltfeld der Schaltanlage 23 installiert. Genauer gesagt sind verschiedene Mess- und Überwachungskomponenten der Basiseinheit 30 im Schaltfeld der Schaltanlage 23 installiert. Wie in Fig. 2 gezeigt, weist die Basiseinheit 30 eine Spannungs-Ermittlungseinheit 12 zum Ermitteln einer elektrischen Spannung in einem Betriebsbereich 24 der Mittelspannungsanlage 11, genauer gesagt zum Ermitteln einer Feldstärke im Schaltfeld der Schaltanlage 23, basierend auf welcher die elektrische Spannung ermittelt wird, sowie eine Zustands-Ermittlungseinheit 13 zum Ermitteln eines Gefahrenzustands im Betriebsbereich 24 anhand der ermittelten Spannung im Schaltfeld, auf. Die in Fig. 2 gezeigte Basiseinheit 30 weist außerdem ein integriertes Netzteil 31 für einen Stromanschluss der Basiseinheit 30 auf.

Das Spannungswarnsystem 10 weist ferner eine Zutrittsabsicht-Erkennungseinheit 14 zum Erkennen einer Zutrittsabsicht der Person 20 in den Betriebsbereich 24 auf. Die Zutrittsabsicht-Erkennungseinheit 14 weist einen Türkontakt 18 zum Erkennen eines Öffnens der Zugangstür 19 zur Mittelspannungsanlage 11 auf. Das Spannungswarnsystem 10 weist ferner ein Warnmittel 15 zum Ausgeben eines akustischen und optischen Warnsignals zum Warnen der Person 20 vor dem Betreten der Mittelspannungsanlage 11 auf. Das Warnmittel 15 weist eine Signallampe an der Zugangstür 19 zum Erzeugen des optischen Warnsignals sowie einen Summer zum Erzeugen des akustischen Warnsignals auf. Die in Fig. 2 gezeigte Basiseinheit 30 weist ferner eine Kontrolleinheit 16, einen Zutrittsabsicht-Erkennungseinheit-Signalanschluss 28 zum Empfangen eines Zutrittsabsichtsignals von der Zutrittsabsicht-Erkennungseinheit 14 bzw. vom Türkontakt 18 zum Erkennen einer Zutrittsabsicht einer Person 20 in den Betriebsbereich 24 anhand der geöffneten Zugangstür 19, und einen Warnmittel-Signalanschluss 29 zum Senden eines Ansteuersignals zum Warnmittel 15 zum Ausgeben des akustischen und des optischen Warnsignals auf. Die Kontrolleinheit 16 ist konfiguriert, das Warnmittel 15 zum Erzeugen des Warnsignals abhängig vom ermittelten Gefahrenzustand sowie abhängig von der erkannten Zutrittsabsicht anzusteuern. Genauer gesagt ist die in Fig. 1 gezeigte Kontrolleinheit 16 dahingehend konfiguriert, dass das Warnmittel 15 zum Erzeugen des Warnsignals angesteuert wird, wenn das Öffnen der Zugangstür 19 erkannt wird bzw. sobald die Person 20 durch ein Betätigen eines Türgriffs und/oder eines Türschlosses der Zugangstür 19 signalisiert, den Betriebsbereich 24 der Mittelspannungsanlage 11 betreten zu wollen.

Bei dem in Fig. 1 gezeigten Beispiel steht das Warnmittel 15 über eine erste Signalleitung 38 und den Warnmittel-Signalanschluss 29 mit der Basiseinheit 30 in Signalverbindung. Die Zutrittsabsicht-Erkennungseinheit 14 steht über eine zweite Signalleitung 39 sowie den Zutrittsabsicht-Erkennungseinheit-Signalanschluss 28 mit der Basiseinheit 30 in Signalverbindung.

Um den Gefahrenzustand zu ermitteln, weist die in Fig. 2 gezeigte Basiseinheit 30 außerdem ein Vergleichsmittel 25 zum Durchführen eines Vergleichs zwischen der ermittelten Spannung und einer einstellbaren Referenzspannung sowie ein Auswertungsmittel 26 zum Auswerten des Vergleichs zwischen der ermittelten Spannung und der Referenzspannung auf, um zu bestimmen, ob die ermittelte Spannung höher als die Referenzspannung ist. Die Kontrolleinheit 16 ist konfiguriert, das Warnmittel 15 zum Erzeugen des Warnsignals anzusteuern, wenn bestimmt wird, dass die gemessene Spannung höher als die Referenzspannung ist. Zudem weist die Basiseinheit 30 eine Einstelleinheit 36 zum Einstellen einer Referenzspannung auf, wobei die Zustands-Ermittlungseinheit 13 konfiguriert ist, den Gefahrenzustand abhängig von einem Abstand bzw. einer Abweichung zwischen der erkannten Spannung und der Referenzspannung zu ermitteln. Am Montagegehäuse 17 der Basiseinheit 30 ist eine Leuchteinheit 21, 22 mit einem ersten Leuchtmittel 21 und einem zweiten Leuchtmittel 22 ausgestaltet. Die Leuchteinheit 21, 22 ist zum Signalisieren eines vordefinierbaren Abstands zwischen einer erkannten Spannung während einer Installation des Spannungswarnsystems 10 in der Mittelspannungsanlage 11 und der einzustellenden Referenzspannung anhand eines Vergleichs zwischen der ermittelten Spannung und der Referenzspannung konfiguriert. Bei einer Installation und/oder Inbetriebnahme der Basiseinheit 30 weist diese werksseitig zunächst einen höchstmöglich voreingestellten Verstärkungsfaktor auf. Bei der Inbetriebnahme der Basiseinheit 30 in einer spannungslosen Schaltanlage 23 leuchten sowohl das Warnmittel 15 sowie das erste Leuchtmittel 21, welche ein Überschreiten eines positiven Offsets anzeigen, da parasitäre elektrische Felder von angrenzenden Schaltanlagen 23 verstärkt werden. Anschließend wird der Verstärkungsfaktor mittels Regler so lange heruntergedreht, bis zunächst das erste Leuchtmittel 21, welches das Überschreiten eines positiven Offsets anzeigt, nicht mehr leuchtet und anschließend das Warnmittel 15 aufhört zu leuchten. Der Verstärkungsfaktor wird nun noch so lange verringert, bis das zweite Leuchtmittel 22 beginnt zu leuchten und damit ein Unterschreiten eines negativen Offsets anzeigt. Sobald dies der Fall ist, ist die Basiseinheit 30 bzw. ein entsprechender Kanal eingerichtet.

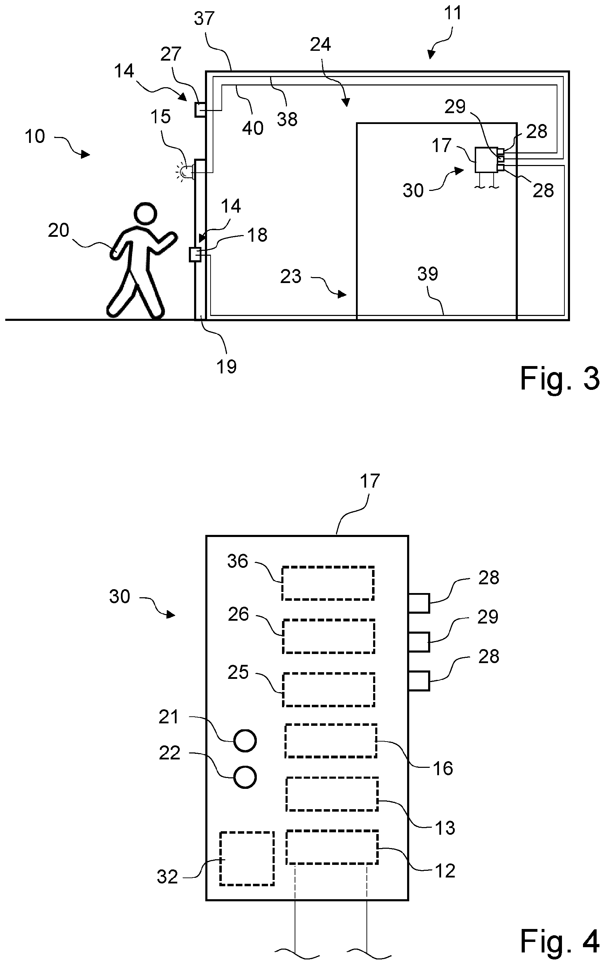

In Fig. 3 ist eine Mittelspannungsanlage 11 gemäß einer zweiten Ausführungsform dargestellt. Diese unterscheidet sich insbesondere dadurch von der ersten Ausführungsform, dass über der Zugangstür ein Bewegungserkennungsmittel 27 zum Erkennen einer Bewegung der Person 20 in Richtung der Zugangstür 19 installiert ist. Das Bewegungserkennungsmittel 27, das als Teil der Zutrittsabsicht-Erkennungseinheit 14 zu betrachten ist, steht über eine dritte Signalleitung 40 sowie einen weiteren Zutrittsabsicht-Erkennungseinheit-Signalanschluss 28 mit der Basiseinheit 30 in Signalverbindung. Die Kontrolleinheit 16 ist konfiguriert, das Warnmittel 15 zum Erzeugen des Warnsignals anzusteuern, wenn eine Bewegung der Person 20 in Richtung der Zugangstür 19 erkannt wird. Die in der Mittelspannungsanlage 11 gemäß Fig. 3 installierte Basiseinheit 30 ist in Fig. 4 in weiterem Detail dargestellt. Das Montagegehäuse 17 dieser Basiseinheit 30 weist einen Akkumulator 32 auf, mittels welchem die Basiseinheit flexibel an unterschiedlichen Positionen im Betriebsbereich 24 und/oder in der Schaltanlage 23 installiert werden kann.

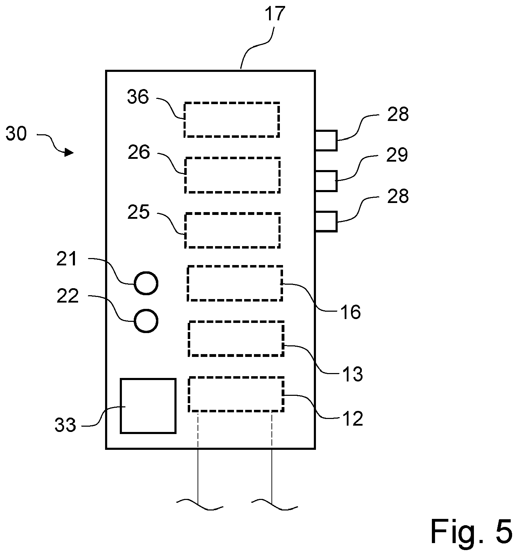

In Fig. 5 ist eine Basiseinheit 30 gemäß einer dritten Ausführungsform dargestellt. Diese unterscheidet sich von der zweiten Ausführungsform lediglich dadurch, dass kein Akkumulator 32 integriert ist, sondern das Montagegehäuse 17 ein Batteriefach 33 zum Einlegen von Batterien für einen entsprechenden Batteriebetrieb der Basiseinheit 30 aufweist.

Die Erfindung lässt neben den dargestellten Ausführungsformen weitere Gestaltungsgrundsätze zu. Das heißt, die Erfindung soll nicht auf die mit Bezug auf die Figuren erläuterten Ausführungsbeispiele beschränkt betrachtet werden.

### Bezugszeichenliste

- 10: Spannungswarnsystem
- 11: Mittelspannungsanlage
- 12: Spannungs-Ermittlungseinheit
- 13: Zustands-Ermittlungseinheit
- 14: Zutrittsabsicht-Erkennungseinheit
- 15: Warnmittel
- 16: Kontrolleinheit
- 17: Montagegehäuse
- 18: Türkontakt
- 19: Zugangstür
- 20: Person
- 21: erstes Leuchtmittel (Leuchteinheit)
- 22: zweites Leuchtmittel (Leuchteinheit)
- 23: Schaltanlage
- 24: Betriebsbereich
- 25: Vergleichsmittel
- 26: Auswertungsmittel
- 27: Bewegungserkennungsmittel
- 28: Zutrittsabsicht-Erkennungseinheit-Signalanschluss
- 29: Warnmittel-Signalanschluss
- 30: Basiseinheit
- 31: Netzteil
- 32: Akkumulator
- 33: Batteriefach
- 36: Einstelleinheit
- 37: Schaltraum
- 38: erste Signalleitung
- 39: zweite Signalleitung
- 40: dritte Signalleitung

## Patentansprüche

1. Spannungswarnsystem (10) für eine Mittelspannungsanlage (11), aufweisend eine Spannungs-Ermittlungseinheit (12) zum Ermitteln einer elektrischen Spannung in einem Betriebsbereich (24) der Mittelspannungsanlage (11), eine Zustands-Ermittlungseinheit (13) zum Ermitteln eines Gefahrenzustands im Betriebsbereich (24) anhand der ermittelten Spannung, eine Zutrittsabsicht-Erkennungseinheit (14) zum Erkennen einer Zutrittsabsicht einer Person (20) in den Betriebsbereich (24), ein Warnmittel (15) zum Ausgeben eines akustischen und/oder optischen Warnsignals zum Warnen der Person (20) vor dem Betreten der Mittelspannungsanlage (11) und eine Kontrolleinheit (16), die konfiguriert ist, das Warnmittel (15) zum Erzeugen des Warnsignals abhängig vom ermittelten Gefahrenzustand sowie abhängig von der erkannten Zutrittsabsicht anzusteuern.

2. Spannungswarnsystem (10) nach Anspruch 1,
**gekennzeichnet durch**
eine Basiseinheit (30) mit einem für die Montage in der Mittelspannungsanlage (11) konfigurierten Montagegehäuse (17), wobei die Spannungs-Ermittlungseinheit (12), die Zustands-Ermittlungseinheit (13) und die Kontrolleinheit (16) wenigstens teilweise innerhalb des Montagegehäuses (17) angeordnet sind.

3. Spannungswarnsystem (10) nach einem der voranstehenden Ansprüche,
**gekennzeichnet durch**
eine Einstelleinheit (36) zum Einstellen einer Referenzspannung, wobei die Zustands-Ermittlungseinheit (13) konfiguriert ist, den Gefahrenzustand abhängig von einem Abstand zwischen der erkannten Spannung und der Referenzspannung zu ermitteln.

4. Spannungswarnsystem (10) nach Anspruch 3,
**gekennzeichnet durch**
eine Leuchteinheit (21, 22) zum Signalisieren eines vordefinierbaren Abstands zwischen einer erkannten Spannung während einer Installation des Spannungswarnsystems in einer Mittelspannungsanlage und der einzustellenden Referenzspannung anhand eines Vergleichs zwischen der ermittelten Spannung und der Referenzspannung.

5. Spannungswarnsystem (10) nach einem der Ansprüche 2 bis 4,
**dadurch gekennzeichnet,**
**dass** die Leuchteinheit (21, 22) am Montagegehäuse (17) ausgestaltet ist.

6. Spannungswarnsystem (10) nach einem der voranstehenden Ansprüche,
**dadurch gekennzeichnet,**
**dass** die Zutrittsabsicht-Erkennungseinheit (14) einen Türkontakt (18) zum Erkennen eines Öffnens einer Zugangstür (19) zur Mittelspannungsanlage (11) aufweist und die Kontrolleinheit (16) konfiguriert ist, das Warnmittel (15) zum Erzeugen des Warnsignals anzusteuern, wenn das Öffnen der Zugangstür (19) erkannt wird.

7. Spannungswarnsystem (10) nach einem der voranstehenden Ansprüche,
**dadurch gekennzeichnet,**
**dass** die Zutrittsabsicht-Erkennungseinheit (14) ein Bewegungserkennungsmittel (27) zum Erkennen einer Bewegung der Person (20) in Richtung einer Zugangstür (19) zur Mittelspannungsanlage (11) aufweist und die Kontrolleinheit (16) konfiguriert ist, das Warnmittel (15) zum Erzeugen des Warnsignals anzusteuern, wenn die Bewegung einer Person (20) in Richtung der Zugangstür (19) erkannt wird.

8. Spannungswarnsystem (10) nach einem der Ansprüche 2 bis 7,
**gekennzeichnet durch**
ein im Montagegehäuse (17) positioniertes Netzteil (31) für eine Netzstromversorgung der Basiseinheit (30), einen im Montagegehäuse (17) integrierten Akkumulator (32) für einen Akkubetrieb der Basiseinheit (30) und/oder ein Batteriefach (33) zum Einsetzen von wenigstens einer Batterie für einen Batteriebetrieb der Basiseinheit (30).

9. Mittelspannungsanlage (11) mit einem Spannungswarnsystem (10) nach einem der voranstehenden Ansprüche.

10. Basiseinheit (30) für eine Mittelspannungsanlage (11) nach Anspruch 9, aufweisend ein für die Montage in der Mittelspannungsanlage (11) konfiguriertes Montagegehäuse (17), in und/oder an welchem eine Spannungs-Ermittlungseinheit (12) zum Ermitteln einer elektrischen Spannung in einem Betriebsbereich (24) der Mittelspannungsanlage (11), eine Zustands-Ermittlungseinheit (13) zum Ermitteln eines Gefahrenzustands im Betriebsbereich (24) anhand der ermittelten Spannung, eine Kontrolleinheit (16), wenigstens ein Zutrittsabsicht-Erkennungseinheit-Signalanschluss (28) zum Empfangen eines Zutrittsabsichtsignals von einer Zutrittsabsicht-Erkennungseinheit (14) zum Erkennen einer Zutrittsabsicht einer Person (20) in den Betriebsbereich (24), und wenigstens ein Warnmittel-Signalanschluss (29) zum Senden eines Ansteuersignals zu einem Warnmittel (15) zum Ausgeben eines akustischen und/oder optischen Warnsignals zum Warnen der Person (20) vor dem Betreten der Mittelspannungsanlage (11) ausgestaltet sind, wobei die Kontrolleinheit (16) konfiguriert ist, das Warnmittel (15) zum Erzeugen des Warnsignals abhängig vom ermittelten Gefahrenzustand sowie abhängig von der erkannten Zutrittsabsicht anzusteuern.
